# EUROPEAN PATENT APPLICATION

(11) **EP 4 301 048 A1**
(43) Date of publication of application: **03.01.2024**
(21) Application number: 22182398.2
(22) Date of filing: 30.06.2022
(51) Int. Cl.: H04W 48/02, H04W 48/10

(54) **ROAMING RADIO ACCESS TO A PUBLIC LAND MOBILE NETWORK**

(71) Applicant: Vodafone Group Services Limited, Newbury RG14 2FN (GB); Vodafone GmbH, 40549 Düsseldorf (DE)
(72) Inventor: KULAKOV, Alexey, London, W2 6BY (GB); WILD, Peter Alexander, London, W2 6BY (GB); FRIEDRICH, Robin, London, W2 6BY (GB); PUDNEY, Christopher, London, W2 6BY (GB); LU, Yang, London, W2 6BY (GB)
(74) Representative: Boult Wade Tennant LLP

(57) **Abstract**

A method for providing roaming radio access at a first Public Land Mobile Network, PLMN.

An indicator is broadcast from a radio access node of the first PLMN, the indicator indicating that the access node will provide connectivity service to subscribers of a second, different PLMN, despite the subscribers of the second PLMN having a forbidden PLMN list that includes the first PLMN.

## Description

### Technical Field of the Disclosure

The disclosure concerns providing and/or obtaining roaming radio access at a first Public Land Mobile Network (PLMN) to a subscriber of a second PLMN. A network entity of a PLMN configured to provide roaming radio access and/or a User Equipment (UE) configured to operate (obtain radio access) are also considered.

### Background to the Disclosure

Energy consumption in mobile (cellular) networks is a significant issue for a Mobile Network Operator (MNO). Recent studies suggest that the base stations in the radio access network and the data centres consume the most power of all entities in the network. 5G systems typically require more antennas, operation over a wider range of frequency bands and a denser layer of small cells than systems based on earlier architectures, all of which cause even higher power consumption. International Telecommunication Union-Telecommunication Standardization Sector (ITU-T) Recommendation L.1470 (01/2020): "Greenhouse Gas Emissions Trajectories for the Information and Communication Technology Sector Compatible with the UNFCCC Paris Agreement" (International Telecommunication Union: Geneva, Switzerland, 2020) details that, within the base station, the largest energy consumption comes from the radio frequency (RF) equipment (power amplifier plus transceivers and cables), which typically use about 65% of the total energy consumption, with cooling (17.5%), digital signal processing and baseband components (10%) and an AC/DC converter (7.5%) making up the remainder. Improving energy efficiency to consume less energy can be achieved through a multitude of solutions, including smart building, virtualizing the core, and enhancing RAN efficiency through modernization of legacy equipment and implementation of low-powered solutions.

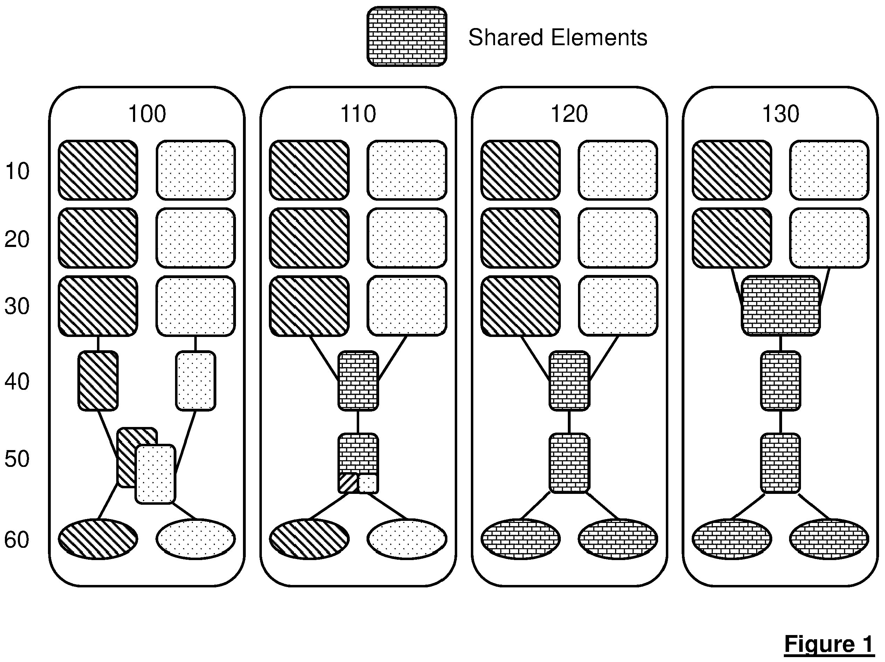

Network sharing is proposed as a technique for reducing energy consumption (https://networks.imdea.org/wp-content/uploads/2020/10/network sharinq.pdf). In this approach, the radio or the core network infrastructures may be shared by more than one MNO. Referring to Figure 1, there is shown a schematic diagram of a range of network sharing options, some of which have been specified by the Third Generation Partnership Project (3GPP). These have different options for sharing: service platforms 10; Home Subscriber Server (HSS) / Home Location Register (HLR) 20; Core Network (CN) Circuit Switched (CS) / Packet Switched (PS) Architecture 30; Radio Network Controller (RNC) 40; radio access node (Node B) 50; and cell / frequency resource 60.

In site sharing 100, the radio access nodes (Node B) for different PLMNs are colocated. In a Multiple Operator Radio Access Network (MORAN) 110 (which is not specified by 3GPP), the RNC 40 and at least a portion of the radio access node 50 are shared. In a Multiple Operator Core Network (MOCN) 120, the RNC 40, radio access node 50 and cell / frequency resource 60 are shared. Finally, a Gateway Core Network (GWCN) 130 shares CN CS/PS Architecture 30, radio access node 50 and cell / frequency resource 60 between PLMNs. MOCN 120 and GWCN 130 are specified in 3GPP Technical Specification (TS) 23.251.

The current defined network sharing options desirably use the tight coordination of the network deployment and planning between the MNO of multiple PLMNs. Along these lines, WO-2013/064419 describes network sharing that can handle handover of a UE from a source location to a target shared location. WO-2010/136452 concerns session transfer between Access Networks for a UE. WO-2011/020676 describes inter-domain roaming between a home PLMN provided with a Circuit Switched over Packet Switched (CSoPS) interworking function (IWF) and a visited PLMN supporting Single Radio Voice Call Continuity (SRVCC) mechanisms.

These approaches may not be efficient. The additional signalling required in existing network sharing techniques to allow one PLMN to accept subscribers from a different PLMN on an ad hoc basis is significant. A more flexible yet robust way to handle network sharing, especially on a time-limited basis, is desirable.

### Summary of the Disclosure

Against this background, the present disclosure provides a method for providing roaming radio access at a first Public Land Mobile Network (PLMN) according to claim 1, a network entity of a PLMN in line with claim 5, a method of accessing a first PLMN at a subscriber of a second PLMN as defined by claim 6 and a User Equipment (UE) in line with claim 12. Other preferred features are disclosed with reference to the claims and in the description below.

A radio access node of the first PLMN (for example, a base station, eNB or gNB) broadcasts an indicator that the PLMN (and specifically, that access node) provides connectivity service to subscribers of at least one other PLMN (the at least one other PLMN typically being identified in the broadcast), despite these subscribers having a forbidden PLMN list that includes the first PLMN. In other words, the first PLMN allows these subscribers access and informs them that they can ignore the indication in their forbidden list that prevents them from seeking access to the first PLMN. A network entity, for example a radio access node, of a PLMN may be configured to operate in accordance with this approach.

Conversely, a subscriber of a second PLMN, having a forbidden PLMN list that includes the first PLMN, receives the broadcast and (in response) transmits a registration request for the first PLMN. This may be implemented at a UE associated with the subscriber (for example, having the Subscriber Identity Module, SIM, for the subscriber). In other words, the subscriber may ignore the information on their forbidden list and access the first PLMN. A UE may likewise be configured to operate in accordance with this approach.

This approach thereby permits network sharing based on roaming. Unlike conventional roaming mechanisms, which are based on national agreements between PLMNs, this approach allows roaming on a local basis and/or in a more time-limited way.

Where the radio access node of the first PLMN receives a registration request from a subscriber of another PLMN, which includes an identifier for the subscriber (for instance, an International Mobile Subscriber Identity, IMSI or a Subscription Concealed Identifier, SUCI), it may use the identifier to determine the Home PLMN of the subscriber. Then, if that Home PLMN is one for which the first PLMN is allowing access at the time of the request, the subscriber may be permitted access. The access may be achieved by the first PLMN interfacing with an Interworking Function (IWF) with the Home PLMN of the subscriber. This may allow the first PLMN to receive data on the subscriber. Based on the received data, the subscriber may be registered with the first PLMN (in the normal way).

A subscriber that receives a broadcast from the first PLMN may delay transmitting a registration request, especially in accordance with a randomly generated time value. This may help to distribute registration requests from subscribers upon receiving the same broadcast from the first PLMN. A maximum value for the randomly generated time value may be indicated in the broadcast from the radio access node.

Following registration with the first PLMN, the subscriber may then receive service from the first PLMN. Additionally or alternatively, the subscriber may perform a PLMN search (in the normal way when roaming). The PLMN search may then indicate that the Home PLMN of the subscriber (or an equivalent PLMN) may be accessible and/or providing service. In response, the subscriber may then initiate procedures to register with that PLMN.

### Brief Description of the Drawings

The approach of the disclosure may be put into practice in various ways, one of which will now be described by way of example only and with reference to the accompanying drawings in which:
Figure 1 shows a schematic diagram of a range of network sharing options; and
Figure 2 schematically depicts approaches according to the disclosure for providing roaming radio access and/or accessing a PLMN from a roaming subscriber.

### Detailed Description of Preferred Embodiments

In an example, PLMN A provides service in a specific geographical area (for example, an area of 30km radius). If no other PLMNs had access nodes covering this area or if the PLMNs switched off their access nodes covering this area, subscribers to a PLMN other than PLMN A will not normally have any radio access in the area. The exceptions to this would be subscribers of another PLMN that have a roaming agreement with PLMN A. Those subscribers would be able to obtain roaming access to PLMN A. Roaming agreements are generally made on a national basis.

Subscribers of other PLMNs not having a national roaming agreement (for example, of PLMN B1 or PLMN B2, which may have a generally co-extensive geographical coverage area with PLMN A) will typically have a forbidden list that includes PLMN A. The UE for these subscribers is configured not access any PLMNs on its forbidden list, even if there is no other PLMN available for service. As a result, there is no connectivity for the UE in such an area.

Network sharing between PLMN A and one or both of PLMN B1 and PLMN B2 may be possible in certain circumstances. For example, there may be a time period when PLMN B1 and/or PLMN B2 choose to switch off the access nodes they provide in a certain geographical area. During that time period, it would be desirable for subscribers of PLMN B1 and/or PLMN B2 to access PLMN A. However, such subscribers will have each have a forbidden list that includes PLMN A. Therefore, they would be unable to obtain connectivity from PLMN A.

In line with national roaming agreements (or MORAN/MOCN/GWCN approaches discussed above), PLMN A and PLMN B1/B2 may be declared as equivalent PLMNs. Then, one base station (gNB), for example from PLMN A may broadcast configurations for both PLMNs (PLMN A and PLMN B1/B2) and is connected to both Core Networks (Core Network of PLMN A and PLMN B1/B2). This is complex and inefficient when simpler roaming arrangements are possible.

Changing the forbidden list for these subscribers on a time limited basis is not straightforward. Moreover, the signalling required to do this would be significant (only by Home PLMN Core Network provisioning), cannot be applied to only a subset of subscribers and would need to take place before the access nodes of PLMN B1 and/or PLMN B2 are switched off. Any subscribers having no connectivity at that time (for example, because the UEs are powered off) would miss the update and therefore have no access. Even after successful connection to PLMN A in this case, the attach request is sent to the core network of PLMN A and further to the HLR/HSS and UDM of PLMN B. In this case of rejection (which might apply to many UEs located in areas where PLMN B still provides coverage), all of this signalling resource in both networks is wasted. A more flexible and robust solution with more efficient signalling would be advantageous.

The approach of the disclosure improves signalling efficiency, by temporarily allowing UEs to ignore the fact that PLMN A is on their forbidden list. There is not necessarily and general or country-wide roaming or network sharing agreement between PLMNs, but only for certain areas within the country. For example, this may be the case where only one operator has deployed a particular radio access technology (for example, 5G) in a certain geographical area.

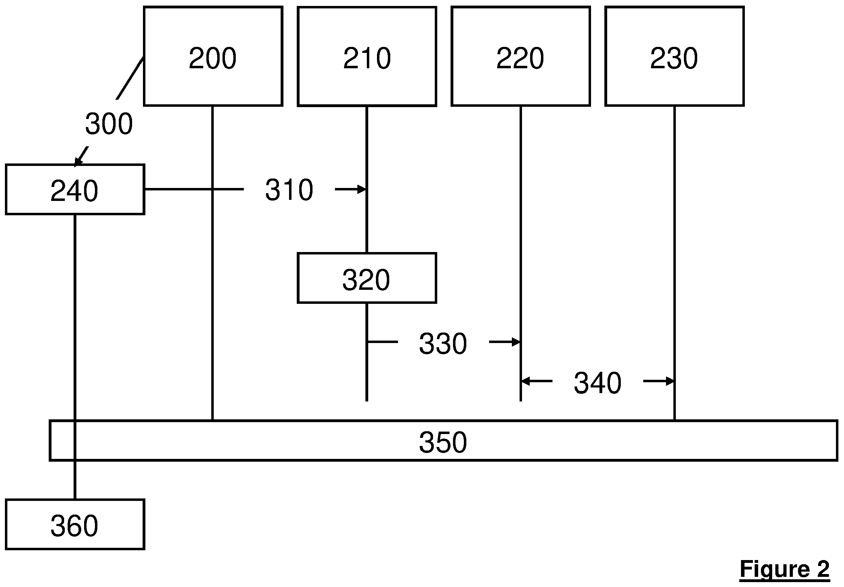

Referring now to Figure 2, there are schematically depicted approaches according to the disclosure for providing roaming radio access and/or accessing a PLMN from a roaming subscriber. This shows: PLMN A Radio Access Network (RAN) 200; PLMN A Access and Mobility management Function (AMF) 210; Interworking Function (IWF) 220; PLMN B Unified Data Management (UDM) 230; and a UE 240.

In an indicator step 300, the PLMN A RAN 200 broadcasts an indicator that it can provide the connectivity service to subscribers (UEs) from different PLMNs (for instance PLMN B or a Dummy PLMN, which would mean that any UE is allowed on this PLMN), even though PLMN A is on the forbidden PLMN list of the UE. In the following the PLMN B is called a Forbidden PLMN (FPLMN). As an example, this indicator could be broadcast by PLMN A RAN 200 broadcasting a configuration for PLMN B with a flag to remove the PLMN B from the list of forbidden PLMNs.

In a UE response step 310, the UE 240 having Home PLMN as PLMN B determines that it cannot synchronize with a radio access cell of PLMN B. It should be noted that there can be various cases where UEs of a FPLMN lose the coverage provided by their Home PLMN. For example, the FPLMN may not deploy any RAN in the geographical area. In another case, the FPLMN may have deployed a RAN in the geographical area, but then it intentionally shuts it down for a certain period (for instance, a part or whole of the night) for energy saving and/or servicing purposes.

In any case, the UE 240 therefore reads the Master Information Block (MIB) and System Information Block 1 (SIB1) of a Cell from PLMN A (RAN 200). After decoding it and, based on the indicator broadcast in step 200, the UE 240 initiates a registration towards PLMN A by providing the mobility identity (that is, a SUCI or more generally, an IMSI). Alternatively, it can also decide not to start the registration. This may be steered by the Home PLMN policy of the subscriber (that is, the policy of PLMN B).

To prevent a sudden signalling "storm" of UEs trying to access PLMN A at the same time, the UE can start a timer with a random time value between 0 and a pre-set level (T). The value of T could be part of a geographic-area-based service agreement or broadcast by the PLMN A, as part of configuration for the PLMN B access in indicator step 300.

The PLMN A AMF 210 (although, this could be another entity) identifies the Home PLMN of the UE 240 in an identification step 330. This is achieved by verifying the received SUCI (for instance, confirming that the Home PLMN for this SUCI is PLMN B).

If there is a geographic-area-based service agreement between PLMN A and PLMN B, PLMN A AMF 210 performs a querying step 330, in which it queries IWF 220 by providing the received SUCI. The IWF 220 is a pre-defined and configured network entity for temporary interworking between PLMN A and PLMN B. The term IWF is used for convenience and the exact mechanism for this interworking could be implemented in a variety of different ways.

The IWF 220 fetches the subscriber data for the relevant UE from PLMN B UDM 230 in fetching step 340 and delivers it to the PLMN A AMF 210. In some circumstances, PLMN B can reject the request from PLMN A. In this case, the UE 240 is not permitted access to PLMN A.

In roaming access step 350, the normal procedures dealing with national roaming services are followed. This allows the UE 240 to access and receive service from PLMN A. The UE 240 will be in connected mode and therefore a slave of PLMN A during this period, allowing it to handover to forbidden tracking areas should the UE 240 relocate during this time.

UE 240 periodically performs search step 360, in which it carries out the normal PLMN search. This is especially true as the UE 240 moves out of the coverage area of PLMN A. If the UE 240 identifies that PLMN B is available for access, it will return to PLMN B for access and service. PLMN A will remain in the forbidden list of the UE 240.

In a general sense and a first aspect, there may be considered a method for providing roaming radio access at a first Public Land Mobile Network (PLMN). A radio access node of the first PLMN broadcasts an indicator that the access node will provide connectivity service to subscribers of a second, different PLMN, despite the subscribers of the second PLMN having a forbidden PLMN list that includes the first PLMN. This aspect may additionally or alternatively reside in a network entity of a PLMN configured to provide roaming radio access from the PLMN accordingly.

Conversely and in accordance with a second aspect, there may be considered a method of accessing a first PLMN at a subscriber of a second PLMN, the subscriber having a forbidden PLMN list that includes the first PLMN. The subscriber receives a broadcast from a radio access node of the first PLMN, the broadcast comprising an indicator that the access node will provide connectivity service to subscribers of the second PLMN. Then, the subscriber advantageously transmits a registration request for the first PLMN. This aspect may additionally or alternatively reside in a User Equipment (UE) configured to operate in accordance with such a method.

The first aspect and second aspect may be considered distinctly or in combination. Optional and/or advantageous additional features may be considered. These may be applied to either or both aspects, as appropriate.

For instance, the radio access node may receive a registration request from a subscriber of the second PLMN. Whether considering from the perspective of the transmission of the registration request or its reception, it will be appreciated that the registration request typically includes an identifier for the subscriber (for example, an International Mobile Subscriber Identity, IMSI or a Subscription Concealed Identifier, SUCI). Then, the first PLMN may determine a Home PLMN of the subscriber from the received identifier (this may take place at a network entity of the first PLMN, for instance the radio access node or at an Access and Mobility management Function, AMF of the first PLMN). If the determined Home PLMN is the second PLMN (for instance, because the first and second PLMNs have an interoperation agreement), the first PLMN interfaces to an Interworking Function (IWF) with the second PLMN, to receive data on the subscriber of the second PLMN. This may also take place at a network entity of the first PLMN, such as the AMF. The IWF may be a specific entity or interface to allow queries between the first and second PLMNs. The first PLMN (specifically its core network) may then register the subscriber of the second PLMN with the first PLMN based on the data on the subscriber received from the Interworking Function.

The subscriber may delay transmitting the registration request. The duration of this delay is beneficially in accordance with a randomly generated time value. A maximum value for the randomly generated time value may be indicated in the broadcast from the radio access node, for example.

Following registration with the first PLMN, the subscriber may perform a PLMN search that indicates accessibility to the second PLMN. The subscriber may then initiate procedures to register with the second PLMN, in response to the PLMN search indicating accessibility to the second PLMN.

Although specific embodiments have now been described, the skilled person will understand that various modifications and variations are possible. Also, combinations of any specific features shown with reference to one embodiment or with reference to multiple embodiments are also provided, even if that combination has not been explicitly detailed herein.

Specific modifications and variations in alternative embodiments will now be discussed. Although the term PLMN has been used throughout this disclosure, this encompasses a Mobile Private Network (MPN). Where a second PLMN (PLMN B) has been discussed herein, this may include multiple second PLMNs (for instance, PLMN B1 and PLMN B2), which may be equivalent networks to each other in some cases. Specific network entities are considered in this disclosure, but the skilled person will appreciate that alternative entities may be used, for example with reference to different network architectures.

## Claims

1. A method for providing roaming radio access at a first Public Land Mobile Network, PLMN, the method comprising:
broadcasting, from a radio access node of the first PLMN, an indicator that the access node will provide connectivity service to subscribers of a second, different PLMN, despite the subscribers of the second PLMN having a forbidden PLMN list that includes the first PLMN.

2. The method of claim 1, further comprising:
receiving, at the radio access node, a registration request from a subscriber of the second PLMN, the registration request including an identifier for the subscriber;
determining a Home PLMN of the subscriber from the received identifier; and
if the determined Home PLMN is the second PLMN, interfacing from the first PLMN to an Interworking Function with the second PLMN, to receive data on the subscriber of the second PLMN.

3. The method of claim 2, further comprising:
registering the subscriber of the second PLMN with the first PLMN based on the data on the subscriber received from the Interworking Function.

4. The method of claim 2 or claim 3, wherein the identifier for the subscriber is an International Mobile Subscriber Identity, IMSI.

5. A network entity of a Public Land Mobile Network, PLMN, configured to provide roaming radio access from the PLMN in accordance with the method of any preceding claim.

6. A method of accessing a first Public Land Mobile Network, PLMN, at a subscriber of a second PLMN, the subscriber having a forbidden PLMN list that includes the first PLMN, the method comprising:
receiving, at the subscriber, a broadcast from a radio access node of the first PLMN, the broadcast comprising an indicator that the access node will provide connectivity service to subscribers of the second PLMN; and
transmitting, from the subscriber, a registration request for the first PLMN.

7. The method of claim 6, wherein the registration request includes an identifier for the subscriber.

8. The method of claim 7, wherein the identifier for the subscriber is an International Mobile Subscriber Identity, IMSI.

9. The method of any one of claims 6 to 8, further comprising:
delaying the step of transmitting the registration request in accordance with a randomly generated time value.

10. The method of claim 9, wherein a maximum value for the randomly generated time value is indicated in the broadcast from the radio access node.

11. The method of any one of claims 6 to 10, further comprising:
following registration with the first PLMN, performing a PLMN search that indicates accessibility to the second PLMN; and
initiating procedures to register with the second PLMN in response to the PLMN search indicating accessibility to the second PLMN.

12. A User Equipment, UE, configured to operate in accordance with the method of any one of claims 6 to 11.
